Europäisches Patentamt

(19) European Patent Office

Office européen des brevets

(11) Veröffentlichungsnummer: **0 086 858**
**A1**

(12) # EUROPÄISCHE PATENTANMELDUNG

(21) Anmeldenummer: 82101370.3

(22) Anmeldetag: 24.02.82

(51) Int. Cl.³: **C 03 B 5/18**
C 03 B 5/027, C 03 B 5/193
C 03 B 5/225, C 03 B 5/42

(43) Veröffentlichungstag der Anmeldung:
**31.08.83 Patentblatt 83/35**

(84) Benannte Vertragsstaaten:
**AT BE CH DE FR GB IT LI NL SE**

(71) Anmelder: Sorg GmbH & Co. KG
Im Aller 23
D-8770 Lohr/Main(DE)

(72) Erfinder: Pieper, Helmut
Buchenstrasse 19
D-8770 Lohr / Main(DE)

(74) Vertreter: Schulze Horn, Stefan, Dipl.-Ing. et al,
Patentanwälte Dipl.-Ing. S. Schulze Horn M.SC. Dr. H.
Hoffmeister Goldstrasse 36
D-4400 Münster(DE)

(54) Verfahren zum Schmelzen von Glas mit Hilfe von elektrischer Energie und Ofen zur Durchführung dieses Verfahrens.

(57) Verfahren zum Schmelzen von Glas, bei welchem Gemenge auf ein Glasbad aufgegeben wird und aufschmilzt, dann das Glas geläutert und homogenisiert und danach durch einen Auslauf abgezogen wird, wobei in der Schmelzzone des Glasbades durch die Zuführung von Energie durch das Hindurchleiten von elektrischem Strom durch das Glasbad vertikale Umlaufströmungen eingestellt werden und das Glas vor der Läuterung in einer Schicht geringer Tiefe, in welcher ebenfalls durch das Hindurchleiten von elektrischem Strom Energie zugeführt wird von der Schmelzzone in die Läuterzone strömt sowie Ofen zur Durchführung dieses Verfahrens mit einer Beheizung mittels Hindurchleiten von elektrischem Strom im Schmelz-, Flach- und Läuterteil.

Fig. 4

EP 0 086 858 A1

Die Erfindung betrifft ein Verfahren zum Schmelzen von Glas, bei welchem Gemenge auf ein Glasbad aufgegeben wird und aufschmilzt, dann das Glas geläutert und homogenisiert und danach durch einen Auslaß abgezogen wird, sowie einen Glasschmelzofen zur Durchführung dieses Verfahrens, bestehend aus von einem Gerüst gehaltenem Feuerfestmaterial, wobei der Ofen einen Schmelz- sowie einen Läuter- und Homogenisierungsteil ausbildet.

Aus der Literatur sind bereits Strömungswalzen bekannt, welche ihren Ausgang an der heißesten Stelle der Wanne, am sogenannten "hot spot" nehmen und welche bei konventionellen rechteckigen Wannen mit durchgehendem Boden beobachtet werden. Sie sind um so ausgeprägter, je geringer die Belastung der Wannen ist. Bei den heutigen hochbelasteten Glasschmelzwannen mit spez. Belastungen um 3 to/m$^2$ sind diese Strömungsbilder nur noch bedingt gültig, da die stärkere Entnahmeströmung mit zunehmender spez. Belastung mehr und mehr dominiert, d. h. dieStrömungswalzen werden verkleinert und verschwinden bei sehr hoher Belastung fast vollständig.

Die Entnahmeströmung einer Schmelzwanne nimmt je nach Belastung etwa 20 – 30 % der Badtiefe über dem Boden der Schmelzwanne ihren Anfang, in einem Bereich, in dem also das Glas zum Teil noch nicht geläutert ist.

Die Entnahmeströmung läuft dann mit zunehmender Geschwindigkeit in Richtung Durchfluß, ohne noch einmal thermisch beeinflußt zu werden.

Verbesserungen wurden z. B. gemäß der DE-PS 25 39 355 erreicht durch den Einbau eines Walls, der diese Strömung zwingt, über den Wall zu steigen und damit das Glas in einen Teil des Glasbades bringt, die der Oberflächenstrahlung mehr zugänglich ist. Eine weitere Verbesserung wurde gemäß der genannten DE-PS durch ein erhebliches Vertiefen des Läuterteils erreicht, was dazu geführt hat, daß die Entnahmeströmung von der Oberkante des Walls nicht mehr gerade zum Durchfluß hindurchzieht, weil die bestehenden Temperatur- und Dichtedifferenzen eine solche Strömung nicht mehr zulassen. Werden jedoch diese Wannen höher belastet als 4 to/m$^2$, dann tritt auch hier ein Durchgehen der Entnahmeströmung in Richtung Durchfluß ein.

Höhere Belastungen der Wannen können nur noch erzielt werden, wenn es gelingt, die minimale Durchlaufzeit erheblich zu verlängern, d. h. dafür zu sorgen, daß keine durchgehende Strömung in der Wanne existiert, und wenn die Differenz zwischen der minimalen Durchlaufzeit und der maximalen Durchlaufzeit so gering wie möglich wird.

Aufgabe der Erfindung ist es also, eine Schmelzwanne zum Erschmelzen von Qualitätsglas zu schaffen, die gegenüber bekannten Wannen eine größere spezifische Leistung und einen geringeren Energieverbrauch aufweist, die eine verbesserte Standzeit (Betriebsdauer) besitzt und die einfach und wirtschaftlich aufgebaut werden kann. Die Wanne gemäß der Erfindung soll auch in Kombination von fossiler und elektrischer Energie betreibbar sein und dort die günstigsten Verhältnisse ausnutzen können. Insbesondere soll der Energieverbrauch pro erzeugten kg Glas gesenkt und die Qualität des erzeugten Glases verbessert werden.

Diese Aufgabe wird erfindungsgemäß dadurch gelöst, daß in der Schmelzzone des Glasbades durch die Zuführung von Energie durch das Hindurchleiten von elektrischem Strom durch das Glasbad vertikale Umlaufströmungen eingestellt werden und das Glas vor der Läuterung in einer Schicht geringer Tiefe, in welcher ebenfalls durch das Hindurchleiten von elektrischem Strom Energie zugeführt wird, von der Schmelzzone in die Läuterzone strömt.

Vorteilhaft kann dieses Verfahren dadurch effektiver gestaltet werden, daß in der Schmelzzone des Glasbades dieses von Luftblasen umgerührt wird.

Vorrichtungsmäßig wird die erfindungsgemäße Aufgabe dadurch gelöst, daß bei dem erfindungsgemäßen Ofen der Wannenboden zwischen dem Schmelzteil und dem Läuter- und Homogenisierungsteil einen Flachteil aufweist, in dem der Boden in einem Schrägteil bis nahe an die Badoberfläche hochgezogen ist und im Schmelzteil Elektroden und im Bereich des Flachteils eine Anzahl von Elektroden angeordnet sind, zwischen denen die Stromleitung über die Gesamtbreite des Schmelzbades verteilt erfolgt.

Weitere vorteilhafte Ausgestaltungen des erfindungsgemäßen Ofens sind in den Unteransprüchen 4 bis 11 beschrieben. Im folgenden werden Ausführungsbeispiele der Erfindung anhand von Zeichnungen näher beschrieben. Es zeigen:

Figur 1 schematisch den Längsschnitt durch einen Ofen gemäß der Erfindung mit einem flachen Bodenteil des Schmelzteils,

Figur 2 den Schnitt gemäß Figur 1 eines Ofens mit einem Boden des Schmelzteils, bei dem zwei Schrägen ineinander übergehen,

Figur 3 einen Längsschnitt durch einen Glasschmelzofen mit einem Schmelzteil mit einem einheitlichen, schrägen Boden,

Figur 4 im Längsschnitt die Strömungsausbildung in einer weiteren Ausgestaltung eines erfindungsgemäßen Ofens, in welcher die durch Elektroden hervorgerufenen Strömungsbilder eingezeichnet sind,

Figur 5 einen Horizontalschnitt durch den Ofen gemäß Figur 4 und

Figur 6 im Schnitt die Ausbildung des Flachteils mit einer in der Wand des Läuterteils eingesetzten Elektrode.

Bei der erfindungsgemäßen Konzeption wird durch die Gestaltung des Bodens und der Badteife bei den Wannen auch bei höheren Belastungen eine Strömung erzwungen, die zu sehr langen minimalen Durchlaufzeiten führt. Eine durchgehende Entnahmeströmung wird bis zu wesentlich höheren spez. Tonnageleistungen sicher vermieden. Durch die Form der Schmelzwanne mit dem schräg abfallenden Boden zum Schmelzteil gelingt es, eine natürliche Strömung zu erzeugen, die der Entnahmeströmung entgegengesetzt ist. Durch das Beheizen der flachesten Stelle der Wanne mit Oberflächenheizung entsteht hier ein massiver breiter Quellpunkt, der einerseits eine durchgehende Strömung verhindert, zum anderen auch das Glas in diesem Bereich so stark aufheizt, daß es bei Erreichen des tiefen Läuterteils eine Temperatur besitzt, die mindestens so hoch ist wie im Läuterteil selbst.

Beim Eintritt in den Läuterteil sinkt das Glas deswegen nicht ab, sodaß es im gesamten Läuterteil, mit Ausnahme der durch die Elektroden erzeugten Strömungen, zu einer gleichmäßigen Kolbenströmung in Richtung Durchfluß kommt. In diesem Fall ist es vorteilhaft, die Elektroden in der Läuterzone nur mit soviel Leistung zu beaufschlagen, als erforderlich ist, um die Eintrittstemperatur in den Durchfluß auf dem optimalen Wert zu halten.

Durch die dadurch ermöglichte Absenkung der Temperatur im Durchflußeintritt ergeben sich drei erhebliche Vorteile: Zum ersten verbleibt ein Großteil der Energie, welche bei den heutigen Konstruktionen im Arbeitswannen- und Speisebereich durch Kühlen abgebaut werden muß, in der Schmelzwanne, zweitens werden die Standzeiten der Durchflüsse erheblich länger, so daß sie nicht mehr länger einen Schwachpunkt in der Konstruktion bilden und drittens ist es möglich, die nachgeschalteten Speiservorherde mit einem erheblich besseren Wirkungsgrad und niedrigerem Energieverbrauch zu betreiben, da die Glastemperatur gerade so eingestellt werden kann, daß ohne Energiezugabe oder verstärkte Energieentnahme durch Kühlung die richtige Temperatur am Tropfpunkt des Speiservorherdes erreicht wird.

Vorteilhafterweise wird die Badtiefe im Schmelzteil gegenüber den jetzt bekannten Wannen vergrößert, weil dadurch die fallende Strömung über den schräg abfallenden Boden verstärkt wird, und es ergibt sich dadurch ein größeres Volumen im Schmelzteil, was dazu führt, daß in Verbindung mit starken vertikalen Umwälzströmungen erhebliche Gemengepartien in größere Badtiefen absinken und dort aufschmelzen, sodaß die Gesamtschmelzleistung vergrößert wird. Bei den konventionellen Bauweisen war eine Vergrößerung der Badtiefe nicht mehr möglich, weil das dort entstehende kalte Bodenglas mit der Entnahmeströmung in den Durchfluß gelangen konnte.

Diese Gefahr besteht bei der Konstruktion gemäß der Erfindung nicht mehr.

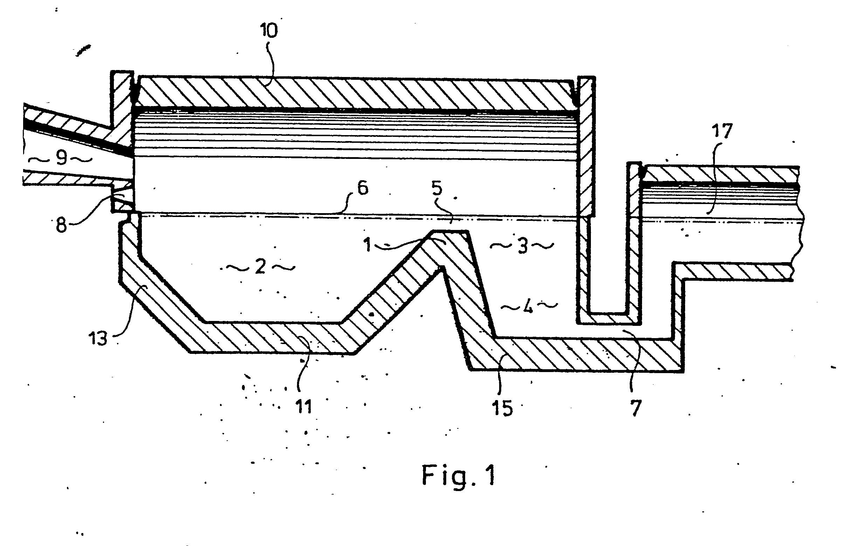

Der erfindungsgemäße Ofen besitzt einen Boden mit einem Teil 1, dessen Ränder beidseitig von schrägen Wänden oder Bodenteilen 12 und 14 gebildet werden. Das Schrägteil 12 ist Teil des Bodens des Schmelzteils 2, wobei sich gemäß Figur 1 an das untere Ende des Teils 12 ein waagerechtes Bodenteil 11 und daran ein schräg nach oben führendes Bodenteil 13 anschließt.

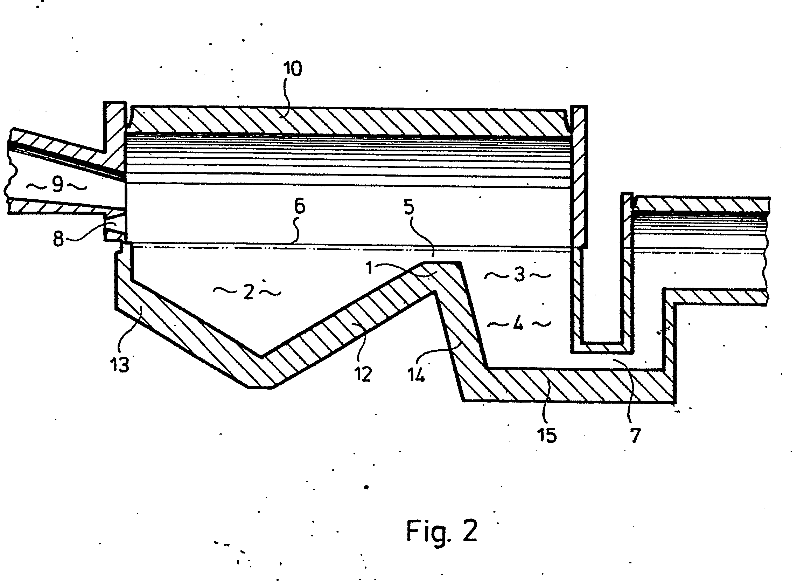

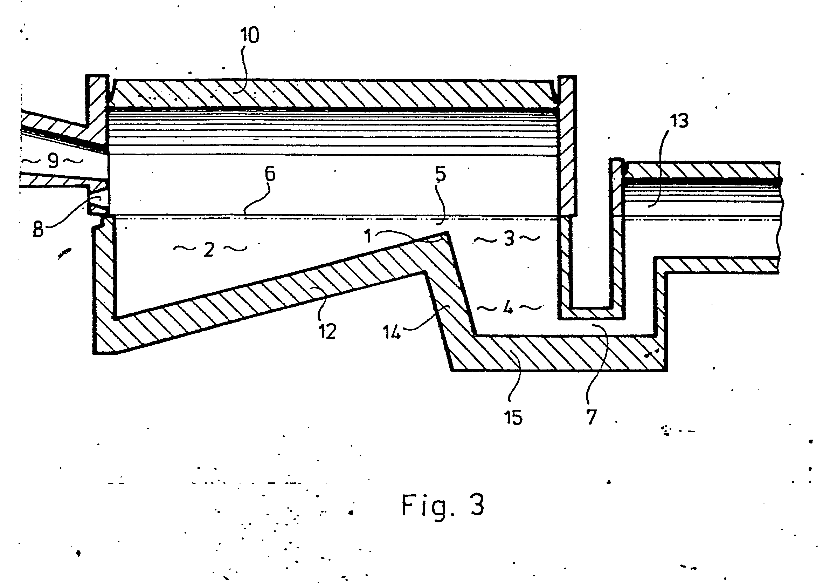

Gemäß Figur 2 können die Schrägteile 12 und 13 direkt an der tiefsten Stelle des Schmelzteiles 2 ineinander übergehen und gemäß Figur 3 kann der Boden auch nur aus dem Boden des Schrägteils 12 bestehen, welches im Flachteil 5 der Schmelze mit einem Winkel $\alpha = 90^{\circ}$ in den Schrägteil bzw. die schräge Wand 14 des Läuterteils 3 und des darunter angeordneten Homogenisierungsteils 4 übergeht. Das Homogenisierungsteil 4 weist einen waagerechten Boden 15 auf, der in ungefähr der Höhe des waagerechten Bodenteils 11 des Schmelzteils angeordnet ist und das Glas strömt homogenisiert und auf die gewünschte Temperatur eingestellt vom Homogenisierungsteil 4 in den Speiser 17 durch einen Durchfluß 7.

Der erfindungsgemäße Ofen besteht im wesentlichen in bekannter Weise aus Feuerfestmaterial, welches von einer Stahlverankerung 16 gehalten wird. Der Ofen wird nach oben von einem Gewölbe 10 abgeschlossen, das Gemenge wird in den Schmelzteil 2 seitlich durch einen Gemengevorbau 9 eingegeben. Die Brenner 8 sind in bekannter Weise wie bei U-Flammen-Wannen, seitenbeheizten Regenerativ-Wannen oder Rekoperativ-Wannen angeordnet.

Neben den Mitteln zur Zuführung thermischer konventioneller Energie sind innerhalb des Läuterteils 3 in bekannter Weise nicht gezeigte Elektroden zur Zuführung elektrischer Energie angeordnet. Aufgrund dieser Aufteilung kann vorteilhaft eine gewünschte Verteilung der Energie zwischen konventionell-thermischer und elektrischer vorgenommen werden.

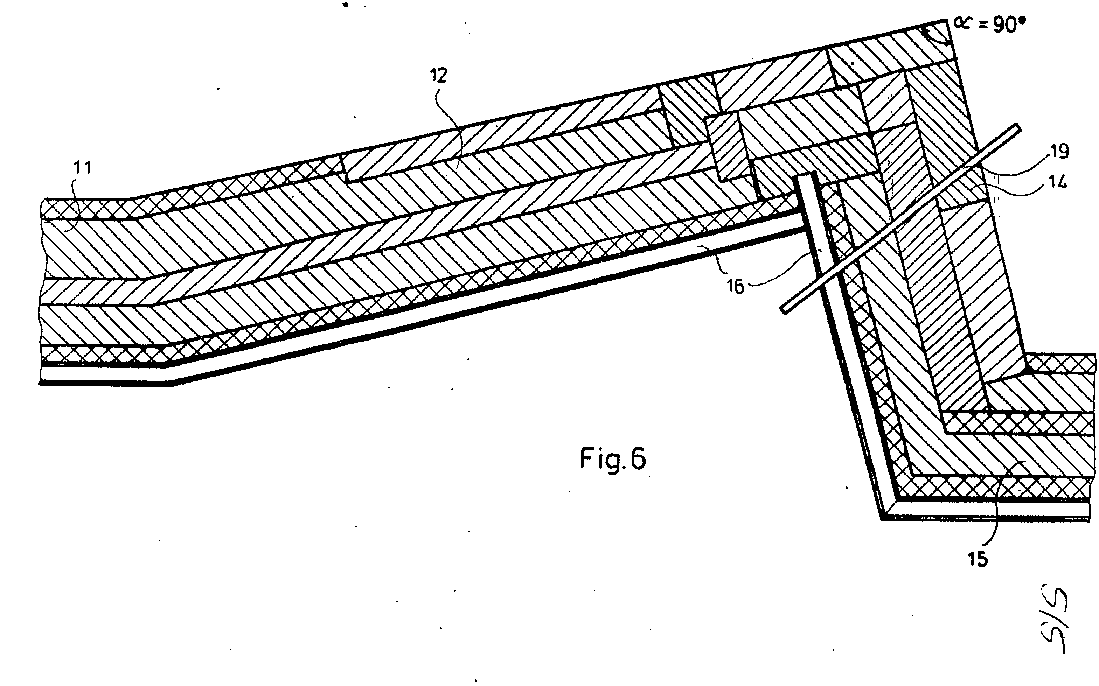

Gemäß Figur 6 können die mit ihrer Spitze den Flachteil 5 nach unten begrenzenden schrägen Bodenteile oder Wände 12 und 14 direkt ineinander übergehen und bilden dabei gegeneinander einen Winkel $\alpha = 90^{\circ}$. Dieser Winkel ermöglicht es, daß die einzelnen Blöcke des Feuerfestmaterials sich gegeneinander nur entlang der Fugen verschieben und daß keine Winkelverwerfungen auftreten. Die Steine gleiten also aneinander vorbei und da das Gerüst 16 unterhalb des Zusammentreffens der genannten Wände 12 und 14 einen Festpunkt bildet, werden die auftretenden Längenänderungen beim Anheizen des Ofens jeweils gradlinig abgeführt. Es ist in diesem Zusammenhang besonders vorteilhaft, daß im Bereich der höchsten Stelle des Flachteils 5 besonders viel Feuerfestmaterial vorliegt und hier eine Abnutzung durch den Glasstrom und dadurch, daß hier eine sehr hohe oder die höchste Temperatur im Ofen vorliegt, in Kauf genommen werden kann.

Das rücklaufende, schräge Bodenteil 12 des Schmelzteils 2 gewährleistet dabei eine längere Zeit zur Erhitzung des Glases und es wird ausgeschlossen, daß sich vor dem Flachteil 5 eine Kaltglastasche bildet. Die durch Bildung des Flachteils gegebene Korrosion kann durch entsprechende konstruktive Maßnahmen, wie genannt, aufgefangen werden und die Ausbildung des Flachteils 5 weist weiterhin den Vorteil auf, daß auch in der Wand 14 Elektroden zur Beheizung des Läuterteils eingesetzt werden können.

Die erfindungsgemäße Ofengestaltung gewährleistet, daß zum einen im Schmelzteil die erforderlichen vertikalen Umwelzströmungen vorliegen und daß zum anderen im Flachteil und im Läuterteil eine Läuterung des Glases vorgenommen wird, wobei dann im Homogenisierungsteil eine Temperaturherabsetzung im gewünschten Maße bei Ausbildung einer reinen Kolbenströmung möglich ist. Durch das Hochziehen des Flachteils wird dabei erreicht, daß das Läuter- und Homogenisierungsteil 3 und 4 relativ hoch angeordnet werden können und in einer günstigen Ausgestaltung des Ofens (Gebäudehöhe) liegen die Böden des Schmelzteils und des Läuter- und Homogenisierungsteils in etwa auf einer gleichen Höhe.

Der erfindungsgemäße Ofen ermöglicht eine Verringerung des Energiebedarfs beim Schmelzen von Qualitätsglas, durch seine hohe spezifische Leistung sind nur relativ geringe wirtschaftliche Investitionen erforderlich und es kann also von einer idealen Lösung der anstehenden Probleme gesprochen werden.

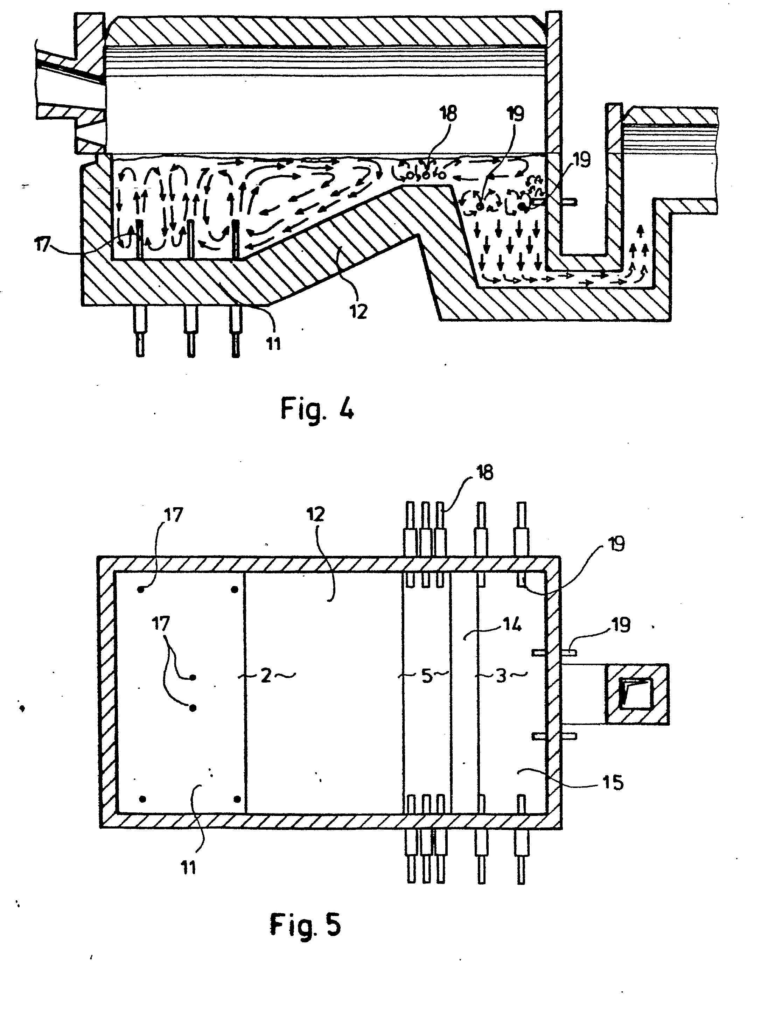

Gemäß Figur 4 kann die vorteilhafte Vertikal-Umwälzströmung am einfachsten dadurch ausgebildet werden, daß in den Boden 11 des Schmelzteils 2 eine Anzahl von vertikal gerichteten Elektroden 17 eingesetzt werden. Da an der Spitze der Elektroden ein hot spot auftritt, wird das Glas oberhalb der Elektroden nach oben strömen und zwischen den Elektroden wieder absteigen. Bei dieser Umwälzströmung wird Gemenge von oben in die Tiefe des Glasbades gerissen und schmilzt dort in größeren Badtiefen auf. Die spezifische Schmelzleistung läßt sich dadurch erheblich steigern. Die Umwälzströmung hat außerdem in Verbindung mit der schrägen Wand 12 des Schmelzteiles 2, welche von dem Boden 11 zu dem Flachteil 5 führt, den Effekt, das sonst durchströmende Kaltglas aufzuhalten.

Von den Elektroden der läuterungsnahen Reihe steigt Glas auf und strömt als Heißglas in Richtung der Flachstelle 5. Dort wird ein erheblicher Teil des Glasstromes umgelenkt. Die tieferen, kälteren Glasschichten oberhalb der Schräge 12 strömen aufgrund von Schwerkrafteinwirkung nach unten und zu dem eigentlichen Schmelzteil 2 zurück und hindern so, daß eine Entnahmeströmung mit zunehmender spezifischer Belastung zu dem Flachteil 5 gelangen könnte, ohne daß eine genügende Läuterung oder ein genügendes Aufschmelzen von Gemenge erfolgt wäre.

In der Flachstelle 5 wird weiter elektrische Energie zugeführt und die Temperatur soweit erhöht, daß dort bereits eine Läuterung auftritt bzw. die Läutertemperatur erreicht wird.

Im Flachteil 5 entsteht durch die Beheizung mit elektrischer Energie eine erneute Temperaturerhöhung. In den Läuterteil 3 strömt also bereits zum Teil geläutertes Glas bzw. auf Läutertemperatur gebrachtes Glas ein. Eine direkte Entnahmeströmung wird durch die angegebenen Maßnahmen verhindert.

In dem Läuterteil 3 wird Energie nur noch in dem Maße zugeführt, wie Energie durch das Glasbad über die Oberfläche und die Wandflächen abgeführt wird. Es entsteht also bis auf die durch die Elektrodenspitzen verursachten Teilströmungen an den Wänden eine über den Querschnitt gleichmäßig absteigende Kolbenströmung, die in der Homogenisierungszone 4 so weit abgekühlt wird, daß sie die für den Betrieb des Speisers notwendige Temperatur aufweist. Ein Abkühlen des Glasstromes nach Durchtritt durch den Durchfluß 7, welcher eine Energievernichtung darstellt, kann also unterbleiben.

Die Abkühlung innerhalb der Homogenisierungszone 4 weist den weiteren Vorteil auf, daß wärmeres Glas sich natürlicherweise oberhalb von kaltem schichtet und daß dadurch Vertikalströmungen vermieden werden.

Die Elektroden 19 zur Zuführung der elektrischen Energie in dem Läuterteil 3 bewirken, daß an den Wänden Kaltströmungen nicht absteigen können, die noch nicht geläutert sind. Die Elektroden 19 führen also nicht nur die benötigte Energie dem Läuterteil 3 zu, sondern beeinflussen auch die Strömungsverhältnisse über den Querschnitt der Zone in gewünschter Weise. Entsprechend können die Elektroden 19 auch in der Wand 14 eingesetzt sein, welche schmelzteilseitig den Läuterteil 3 und den Homogenisierungsteil 4 begrenzt. Die Höhe der Elektroden ist dabei höher als die einer Ebene, welche das Schmelzbad zwischen dem Boden 11 und der Oberfläche 6 teilt.

Für die Durchführung der Erfindung und die Ausgestaltung des erfindungsgemäßen Ofens ist es also wesentlich, einmal im Schmelzteil Vertikalströmungen einzustellen, dann in einem Flachteil das Glas auf Läutertemperatur zu erhitzen und danach in einem Läuter- und Homogenisierungsteil nicht nur zu läutern, sondern auch in der Temperatur wie gewünscht einzustellen. Die Ausgestaltung des Ofens mit dem schrägen Bodenabschnitt 12 gewährleistet dabei in Verbindung mit der Zuführung der elektrischen Energie durch die Elektroden 18 im Flachteil 5, daß ungenügend behandeltes Glas in den Läuterteil 3 nicht einfließt. Die Strömungsverhältnisse innerhalb dieses Teiles werden durch die Elektroden 19 in der erforderlichen Weise eingestellt.

Da der erfindungsgemäße Ofen auch den Einsatz von herkömmlicher fossiler Energie im Oberofen ermöglicht und eine Einstellung der Verhältnisse von fossiler und elektrischer Energie in sehr weitem Rahmen möglich ist, ergibt der erfindungsgemäße Ofen neben der hohen spezifischen Leistung einen besonders geringen Energieverbrauch und da er ein sehr kleines Bauvolumen aufweist, kann von einer idealen Lösung der anstehenden Probleme gesprochen werden.

Liste der Bezugszeichen

1    Boden im Flachteil

2    Schmelzteil

3    Läuterteil

4    Homogenisierungsteil

5    Flachteil

6    Badoberfläche

7    Auslaß

8    Brenner

9    Gemengeeinlegeschacht

10   Gewölbe

11   Boden des Schmelzteils

12   Schrägabschnitt von 11

13   flachteilfernes Schrägteil

14   schräge Wand von 3, 4

15   Boden von 3, 4

16   Stahlverankerung

17   Elektroden im Schmelzteil 2

18   Elektroden im Flachteil 5

19   Elektroden im Läuter- und Homogenisierungsteil

Patentansprüche :

1. Verfahren zum Schmelzen von Glas, bei welchem Gemenge auf ein Glasbad aufgegeben wird und aufschmilzt, dann das Glas geläutert und homogenisiert und danach durch einen Auslauf abgezogen wird, dadurch gekennzeichnet, daß in der Schmelzzone des Glasbades durch die Zuführung von Energie durch das Hindurchleiten von elektrischem Strom durch das Glasbad vertikale Umlaufströmungen eingestellt werden und das Glas vor der Läuterung in einer Schicht geringer Tiefe, in welcher ebenfalls durch das Hindurchleiten von elektrischem Strom Energie zugeführt wird, von der Schmelzzone in die Läuterzone strömt.

2. Verfahren nach Anspruch 1, dadurch gekennzeichnet, daß in der Schmelzzone des Glasbades dieses von Luftblasen umgerührt wird.

3. Glasschmelzofen zur Durchführung des Verfahrens nach Anspruch 1 oder 2, bestehend aus von einer Stahlverankerung gehaltenem Feuerfestmaterial, wobei der Ofen einen Schmelz- sowie einen Läuter- und Homogenisierungsteil bildet, dadurch gekennzeichnet, daß der Wannenboden zwischen dem Schmelzteil (2) und dem Läuter- und Homogenisierungsteil (3, 4) einen Flachteil aufweist, in dem der Boden (1) in einem Schrägteil (12) bis nahe an die Badoberfläche hochgezogen ist und im Schmelzteil (2) Elektroden (17) und im Bereich des Flachteils (5) eine Anzahl von Elektroden (18) angeordnet sind, zwischen denen die Stromleitung über die Gesamtbreite des Schmelzbades verteilt erfolgt.

4. Glasschmelzofen nach Anspruch 3, dadurch gekennzeichnet, daß die Elektroden (17) innerhalb des Schmelzteils (2) vertikal angeordnet sind.

5. Glasschmelzofen nach Anspruch 3 oder 4, dadurch gekennzeichnet, daß am Umfang des Läuter- und Homogenisierungsteils (3, 4) eine Anzahl von Elektroden (19) unterhalb der höchsten Erhebung des Flachteils (5) in einer Ebene oder mehreren Ebenen angeordnet sind, die höher liegen, als die Ebene der durchschn-ittlichen halben Badtiefe des Schmelzteils (2).

6. Glasschmelzofen nach einem der Ansprüche 3 bis 5, dadurch gekennzeichnet, daß die Elektroden (19) in dem schmelzteilnahem Schrägteil (14) des Läuter- und Homogenisierungsteils (3, 4) angeordnet sind.

7. Glasschmelzofen nach einem der Ansprüche 3 und 6, dadurch gekennzeichnet, daß die Schrägteile (12, 13) des Schmelz- und des Läuter- und Homogenisierungsteils (2, 3, 4) miteinander einen Winkel $\alpha = 90^\circ$ bilden.

8. Glasschmelzofen nach einem der Ansprüche 3 bis 7, dadurch gekennzeichnet, daß der Boden (11) des Schmelzteils (2) an dem flachteilfernen Ende einen weiteren Schrägteil (13) aufweist und die beiden Schrägteile (12, 13) an der tiefsten Stelle des Bodens (11) ineinander übergehen oder zwischen den beiden Schrägteilen (12, 13) ein waagerechtes Bodenteil (11) angeordnet ist.

9. Glasschmelzofen nach Anspruch 7, dadurch gekennzeichnet, daß die Steine des Feuerfestmaterials der beiden zum Flachteil (5) führenden Schrägteile (12, 14) rechtwinklig zueinander angeordnet sind und die Stahlverankerung im Bereich des Flachteils (5) einen Festpunkt ausbildet.

10. Glasschmelzofen nach einem der Ansprüche 3 bis 9, dadurch gekennzeichnet, daß die größte Badtiefe des Schmelz- und des Läuter- und Homogenisierungsteils (2, 3, 4) ungefähr gleich sind.

11. Glasschmelzofen nach einem der Ansprüche 3 bis 10, dadurch gekennzeichnet, daß im Boden des Schmelzteils (2) Mittel für das Einleiten von in der Schmelze aufsteigenden Luftblasen vorhanden sind.

115

Fig. 1

Fig. 2

Fig. 3

Fig. 4

Fig. 5

Fig.6

**Europäisches Patentamt**

# EUROPÄISCHER RECHERCHENBERICHT

00 86 858

EP 82 10 1370.3

| Kategorie | Kennzeichnung des Dokuments mit Angabe, soweit erforderlich, der maßgeblichen Teile | betrifft Anspruch |
|---|---|---|
| A | US - A - 3 532 483 (J. CARDOT)<br>* Spalte 4, Zeilen 35 bis 37, 57 bis 66;<br>Spalte 5, Zeilen 5 bis 14; Fig. 1 *<br>& DE - A - 1 254 297<br>-- | 1,2,4,<br>9-11 |
| A | US - A - 2 975 224 (O.G. BURCH)<br>* Ansprüche 1, 3 bis 5, 7, 12, 13;<br>Spalte 4, Zeilen 49 bis 73; Fig. 6, 15,<br>16 *<br>-- | 1,2,4,<br>10,11 |
| A | US - A - 1 944 855 (H.A. WADMAN)<br>* Ansprüche 1, 5 bis 8, 10, 11; Fig. 1,<br>2 *<br>-- | 3,7-10 |
| A | DE - B2 - 2 539 355 (SORG GMBH & CO. KG)<br>* Anspruch 1; Spalte 3, Zeilen 38 bis<br>46 *<br>---- | 6 |

**KLASSIFIKATION DER ANMELDUNG (Int. Cl.³)**

C 03 B 5/18
C 03 B 5/027
C 03 B 5/193
C 03 B 5/225
C 03 B 5/42

**RECHERCHIERTE SACHGEBIETE (Int. Cl.³)**

C 03 B 5/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 30-09-1982 | STROUD |

EPA form 1503.1   06.78